# EUROPÄISCHE PATENTSCHRIFT

(11) **EP 0 860 269 B1**
(45) Veröffentlichungstag und Bekanntmachung des Hinweises auf die Patenterteilung: **09.04.2003**
(21) Anmeldenummer: 97118233.2
(22) Anmeldetag: 21.10.1997
(51) Int. Cl.: B30B 11/24, B29C 47/40

(54) **Doppelschneckenextruder**
Twin screw extruder
Extrudeuse à deux vis

(30) Priorität: 22.02.1997 DE 29703158 U
(43) Veröffentlichungstag der Anmeldung: 26.08.1998
(73) Patentinhaber: REHAU AG + Co, 95111 Rehau (DE)
(72) Erfinder: Satziner, Dieter, 95111 Rehau (DE)

(56) Entgegenhaltungen:
- EP-A- 0 472 431
- EP-A- 0 598 376
- DE-A- 2 748 918
- DE-C- 3 700 771
- US-A- 2 466 934
- DATABASE WPI Section Ch, Week 8626 Derwent Publications Ltd., London, GB; Class A32, AN 86-168534 XP002088326 & SU 1 196 067 A (BEARINGS IND RES DES) , 7. Dezember 1985

## Beschreibung

Die Erfindung betrifft einen Doppelschneckenextruder mit zwei konischen Extruderschnecken, wobei die Schneckenwellen einen Winkel zueinander bilden, der dem Winkel der Extruderschnecken entspricht, wobei eine Antriebsvorrichtung eine Schneckenwelle antreibt und wobei die zweite Schneckenwelle über ein Kegelzahnradgetriebe von der ersten Schneckenwelle angetrieben ist.

Ein gattungsgemäßer Doppelschneckenextruder ist aus der DE 37 00 771 C1 bekannt. Bei dieser Maschine hat das Kegelzahnradgetriebe zwei Sätze von gegenläufig schräg verzahnten kegeligen Stimrädem, wodurch der Vorteil erzielt wird, daß die Übertragung der Drehmomente ohne das Auftreten von Axialkräften erfolgen kann. Auch DE-A-27 48118 zeigt einen ähnlichen Doppelschneckenextruder.

Die bekannte Maschine hat jedoch den Nachteil, daß zunächst die gesamte Antriebskraft an der ersten Schneckenwelle ansetzt und daß erst über das Kegelzahnradgetriebe mit seinen zwei Sätzen von gegenläufig schräg verzahnten kegeligen Stimrädem 50 % der Antriebskraft auf die zweite Schneckenwelle übertragen wird. Diese Übertragung erfolgt bei Schneckendrehzahl, d. h. die Kraftverteilung wird bei der niedrigsten Drehzahl der Maschine vorgenommen. Dabei erfolgt im Bereich der ineinandergreifenden Verzahnung des Kegelzahnradgetriebes die höchste Flächenpressung, weil die Antriebskräfte bei der niedrigsten Drehzahl der Maschine verteilt werden. Die schräg verzahnten kegeligen Stirnräder des Kegelzahnradgetriebes sind damit erhöhtem Verschleiß ausgesetzt.

Die einseitige Kraftverteilung bei niedrigen Drehzahlen nach dem Stand der Technik hat weiter den Nachteil, daß zumindest die erste Schneckenwelle wegen ihres Direktantriebs aufwendiger gelagert werden muß. Durch den direkten Antrieb der ersten Schneckenwelle und die Übertragung von 50 % der Antriebskraft durch diese auf die zweite Schneckenwelle über das Kegelzahnradgetriebe müssen die Zahnräder eine Übersetzung von 1:1 besitzen, da andernfalls eine einwandfreie Kraftübertragung nicht möglich ist.

Dies bedeutet aber, daß die Drehzahlen innerhalb des Antriebs in jeder Antriebsphase gleich sein müssen, so daß eine Untersetzungsmöglichkeit zwischen den Stirnrädern des Kegelzahnradgetriebes und damit eine Drehmomentbeeinflussung nicht erfolgen kann.

Hier setzt die Erfindung ein, die es sich zur Aufgabe gestellt hat, einen variableren Antrieb eines Doppelschneckenextruders mit Drehmomentbeeinflussung innerhalb des Kegelzahnradgetriebesund des Vorgeleges anzugeben. Erfindungsgemäß wird dazu vorgeschlagen, daß die Antriebskräfte des Kegelzahnradgetriebes auf zwei Vorgelegewellen verteilt sind, daß die Vorgelegewellen achsparallel zu den zugeordneten Schneckenwellen angeordnet sind, und daß jede Vorgelegewelle über ein den Abstand zwischen Vorgelegewelle und Schneckenwelle übergreifendes Stirnradgetriebe zugeordnete Schneckenwelle axial kraftfrei antreibt.

Durch die Vorverlegung der Kräfteaufteilung auf den Kegelradsatz der Vorgelegewellen, d. h. in den schneller laufenden Getriebeteil, sind in diesem Bereich größere Durchmesser der Zahräder bei niedrigerer spezifischer Belastung der Verzahnung einsetzbar. Gerade die Vorverlegung der Kräfteaufteilung von der Schneckenwelle auf die Vorgelegewellen mit deren Kegelradsatz ermöglicht die Leistungsverteilung vor der Übergabe der Kräfte an die Schneckenwellen, so daß maschinentechnisch an den Vorgelegewellen größere Radsätze eingesetzt werden können, die als schneller laufende Teile höhere Drehzahlen bei abgesenkter spezifischer Belastung der Verzahnung erlauben. Damit werden die kritischen Bauteile, nämlich die schräg verzahnten kegeligen Stirnräder, weniger beansprucht und entsprechend wird die Lebensdauer dieser Bauteile gesteigert.

Erfindungsgemäß können die Stirnradgetriebe von den Vorgelegewellen zu den Schneckenwellen unterschiedliche Stimraddurchmesser in diesen Bereichen aufweisen, so daß die Vorgelegewellen schneller laufen können als die zugeordneten Schneckenwellen. Damit kann über die höhere Drehzahl einer Vorgelegewelle ein kleineres Drehmoment erzeugt werden, als es schließlich an der Schneckenwelle auftritt. Auch durch diese Maßnahme sind die als Verschleißbauteile geltenden Stirnräder des Antriebsmechanismus weniger dem Verschleiß ausgesetzt.

Die beschriebene Drehmomentaufteilung im Kegelzahnradgetriebe ist ein wesentliches Merkmal der Erfindung, das auf die Vorverlegung der Krafteinleitung auf das Stimradgetriebe an den Vorgelegewellen zurückzuführen ist. Gegenüber dem Stand der Technik ist die erfindungsgemäße indirekte Krafteinleitung in das Getriebe über die Stirnräder der Vorgelegewellen damit ein erheblicher Vorteil, der insbesondere im Vergleich zur direkten Kraftverteilung des Standes der Technik zum Tragen kommt.

Die schräg verzahnten kegeligen Stimräder des erfindungsgemäßen Antriebs sind durch die Kombination jeweils zweier gegeneinander angestellter Sätze von Stirnrädern bis in den Bereich des höchsten Drehmoments auf der Schneckenwelle axialkraftfrei, so daß Axialkräfte beim erfindungsgemäßen Aufbau bei der Auslegung der Lager nicht zu berücksichtigen sind.

Es hat sich als vorteilhaft erwiesen, daß die Stimradgetriebe der Vorgelegewellen, über die die Schneckenwellen angetrieben werden, hintereinanderliegend angeordnet sind. Auf diese Weise können größere Stirnräder auf den Schneckenwellen gewählt werden, die höhere Drehmomente auf den Schneckenwellen ermöglichen. Gegenüber dem Stand der Technik wurde damit ein Getriebeteil geschaffen, welches eine Drehmomenterhöhung bis über 30 % erlaubt.

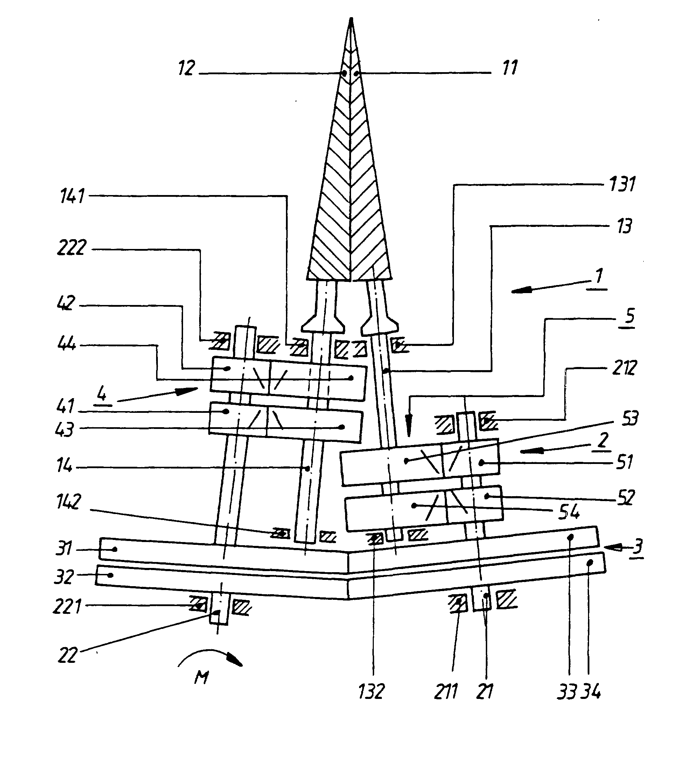

In der Zeichnung ist ein Doppelschneckenextruder 1 schematisch dargestellt. Dieser Doppelschneckenextruder 1 besitzt die beiden im Winkel zueinander angeordneten Extruderschnecken 11, 12, welche über den Antrieb 2 in Drehbewegung gesetzt werden. Der Antrieb 2 besteht aus den Vorgelegewellen 21, 22, welche über die Lager 211, 212, 221, 222 gelagert sind. Die Vorgelegewellen 21, 22 tragen das Kegelzahnradgetriebe 3, welches aus jeweils 2 Sätzen 31, 32, 33, 34 besteht. Die bei M an der Vorgelegewelle 22 aus dem in der Zeichnung nicht dargestellten Antriebsmotor eingeleitete Antriebskraft wird über das Kegelzahnradgetriebe 3 jeweils zu 50 % auf die Vorgelegewellen 22, 21 übertragen.

Die Vorgelegewellen 22, 21 tragen weiter die Stimräder 41, 42, 51, 52 der Stirnradgetriebe 4, 5, die ihrerseits mit den Stimrädem 43, 44, 53, 54 kämmen, die auf den Schneckenwellen 13, 14 angeordnet sind. Die Schneckenwellen 13, 14 sind in den zugeordneten Drucklagem 131, 141 gelagert, wobei diese Lager so ausgelegt sind, daß die Rückdruckkräfte von den Extruderschnecken 11, 12 aufgenommen werden.

Innerhalb des Getriebeaufbaus sind die Schneckenwellen 13, 14 an ihren von den Extruderschnecken 11, 12 abgewandten freien Enden über die Lagerelemente 132, 142 gelagert.

Die für den Antrieb 2 vorgesehenen Stimräder 31, 32, 33, 34, 41, 42, 43, 44, 51, 52, 53, 54 sind in der Zeichnung als schräg verzahnte kegelige Stirnräder 31, 32, 33, 34 bzw. als schräg verzahnte Stimräder 41, 42, 43, 44, 51, 52, 53, 54 gezeigt, die wegen der axialkraftfreien Lagerung der Schneckenwellen 13, 14 und der Vorgelegewellen 21, 22, jeweils in zwei Sätzen gegeneinander angestellt angeordnet sind. Die Zeichnung zeigt femer, daß das Stimradgetriebe 4, welches die Vorgelegewelle 22 mit der Schneckenwelle 14 verbindet, versetzt zu dem Stimradgetriebe 5, welches die Vorgelegewelle 21 mit der Schneckenwelle 13 verbindet, angeordnet ist. Durch diese Bauart wird erreicht, daß für die Stirnradgetriebe 4, 5 größere Stimräder auf der Schneckenwelle verwendet werden können, als sie bei einer Anordnung der Stimradgetriebe 4, nebeneinander verwendet werden könnten. Die gezeigte Bauart wird vorteilhaft dann gewählt, wenn höhere Drehmomente an den Schnecken gefordert werden.

## Patentansprüche

1. Doppelschneckenextruder (1) mit zwei konischen Extruderschnecken (11, 12), wobei die Schneckenwellen einen Winkel zueinander bilden, der dem Winkel der Extruderschnecken entspricht, wobei eine Antriebsvorrichtung (2) eine Schneckenwelle (13) antreibt, und wobei die zweite Schneckenwelle (14) über ein Kegelzahnradgetriebe (3) von der ersten Schneckenwelle (13) angetrieben ist, **dadurch gekennzeichnet, daß** die Antriebskräfte über das Kegelzahnradgetriebe (3) auf zwei Vorgelegewellen (21, 22) verteilt sind, daß die Vorgelegewellen (21, 22) achsparallel zu den zugeordneten Schneckenwellen (13, 14) angeordnet sind, und daß jede Vorgelegewelle (21, 22) über ein den Abstand zwischen Vorgelegewelle (21, 22) und Schneckenwelle (13, 14) übergreifendes Stirnradgetriebe (4, 5) die zugeordnete Schneckenwelle (13, 14) axialkraftfrei antreibt.

2. Doppelschneckenextruder nach Anspruch 1, **dadurch gekennzeichnet, daß** die Stirnradgetriebe (4, 5) zwischen den Vorgelegewellen (21, 22) und den zugeordneten Schneckenwellen (13, 14) hintereinanderliegend angeordnet sind.

## Claims

1. Twin screw extruder (1) with two conical extruder screws (11, 12), wherein the screw shafts form an angle with each other corresponding to the angle of the extruder screws, and wherein a drive mechanism (2) drives one of the screw shafts (13) and the second screw shaft (14) is driven by the first screw shaft (13) via a bevel gear assembly (3), **characterised in that** the drive forces are distributed via the bevel gear assembly (3) over two layshafts (21, 22), **in that** the intermediate shafts (21, 22) are axially parallel to the assigned screw shafts (13, 14), and **in that** each layshaft (21, 22) drives the assigned screw shaft (13, 14) without axial forces via spur gear assemblies (4, 5) that extend across the gap between the layshafts (21, 22) and the screw shafts (13, 14).

2. Twin screw extruder according to Claim 1, **characterised in that** the spur gear assemblies (4, 5) between the intermediate shafts (21, 22) and the assigned screw shafts (13, 14) are mounted one behind the other.

## Revendications

1. Extrudeuse à double vis (1) avec deux vis d'extrudeuse coniques (11, 12), les arbres des vis formant entre eux un angle correspondant à l'angle des vis d'extrudeuse, un dispositif d'entraînement (2) entraînant un arbre de vis (13) et le second arbre de vis (14) étant entraîné par le premier arbre de vis (13) par l'intermédiaire d'un engrenage conique (3), **caractérisée en ce que** les forces d'entraînement sont réparties via l'engrenage conique (3) sur les deux arbres de transmission (21, 22), que les arbres de transmission (21, 22) sont disposés parallèlement à l'axe des arbres de vis correspondants (13, 14) et que chaque arbre de transmission (21, 22) entraîne l'arbre de vis correspondant (13, 14) sans force axiale par l'intermédiaire d'un engrenage droit (4, 5) qui occupe l'espace entre l'arbre de transmission (21, 22) et l'arbre de vis (13, 14).

2. Extrudeuse à double vis selon la revendication 1, **caractérisée en ce que** les engrenages droits (4, 5) sont disposés entre les arbres de transmission (21, 22) et les arbres de vis correspondants (13, 14).
